# EUROPÄISCHE PATENTSCHRIFT

(11) **EP 0 406 627 B1**
(45) Veröffentlichungstag und Bekanntmachung des Hinweises auf die Patenterteilung: **10.02.1993**
(21) Anmeldenummer: 90111766.3
(22) Anmeldetag: 21.06.1990
(51) Int. Cl.: G01D 21/00

(54) **Identifikationsvorrichtung für Messgeber**
Identification device for sensors
Dispositif d'identification pour capteurs

(30) Priorität: 04.07.1989 DE 3921962
(43) Veröffentlichungstag der Anmeldung: 09.01.1991
(73) Patentinhaber: Erwin Kayser-Threde GmbH, D-81379 München (DE)
(72) Erfinder: Heyer, Heinz-Volker, D-8000 München 80 (DE)
(74) Vertreter: Hoffmann, Klaus, Dr. rer. nat.

(56) Entgegenhaltungen:
- DE-A- 3 544 095

## Beschreibung

### Die vorliegende Erfindung betrifft eine Identifikationsvorrichtung.

Ein modernes Meßsystem besteht aus einer programmierbaren Erfassungseinheit, zur Steuerung und Auswertung und den Meßgebern. Den Meßgebern sind Meßverstärker nachgeschaltet, die die Gebersignale in geeigneter Weise an die Eingangsanforderungen der Erfassungseinheit anpassen. Der Meßablauf ist durch die neuen Systeme weitgehend automatisiert. Bei Meßgebern mit Kalibrierfunktion werden alle Meßparameter durch automatisch ablaufende Kalibrierzyklen überprüft und eingestellt. An einen Kalibrieranschluß des Meßgebers wird dazu eine Spannung angelegt, um das Geberelement des Meßgebers zu beeinflussen und um so Signale am Ausgang des Meßgebers hervorzurufen. Diese Signale am Meßausgang werden für die Kalibrierung ausgewertet.

Aus der DE-OS 35 44 095 ist eine Vorrichtung zum Kalibrieren von analogen Echtzeitsignalen bekannt, welche von mehreren Meßstellen oder Sensoren stammen. Diese Meßstellen sind über Leitungen fest mit einem Prozeßrechner oder einem Meßstellenschalter oder weiteren Komponenten verbunden.

Mehrere Meßwerte können gleichzeitig von vielen Sensoren aufgenommen werden, wobei die verwendeten Sensoren eine Eigencharakteristik aufweisen, die gesondert berücksichtigt werden muß. Die Eigencharakteristik der Sensoren, hierzu zählen insbesondere Nullpunktlage und Aussteuerbereich, kann dann automatisch gemessen und eine automatische Kalibrierung durchgeführt werden.

Weil besagte Sensoren fest mit dem System verbunden sind und jeder Meßkanal einen spezifischen Sensor besitzt, ist die gemessene elektrische Größe immer eindeutig einem Sensor und einem entsprechenden physikalischen Meßwert zuordbar. Es kann mit der Kalibrierfunktion nicht die Art der gemessenen Größe bestimmt werden oder ein Sensor identifiziert werden.

Demgegenüber gibt es variable Systeme mit wechselnden Meßgebern, wie zum Beispiel mobile Meßsysteme oder Meßsysteme mit wechselnder Einsatzmöglichkeit. Hier werden viele unterschiedliche Meßgeber verwendet und ständig ausgetauscht, wobei völlig unterschiedliche Typen wie z.B. Drucksensoren oder Beschleunigungssensoren eingesetzt werden können, die aber alle einen elektrischen Messwert liefern. Um brauchbare Meßergebnisse zu erhalten, ist es notwendig, den verwendeten Geber zu identifizieren.

In vielen Fällen geschieht die notwendige Identifikation eines bestimmten Meßgebers, welcher zu einem bestimmten Zeitpunkt zum Einsatz kommt, manuell. Jeder Meßgeber ist dazu mit einer ablesbaren Kennzeichnung versehen, die der Meßingenieur über eine Geberkartei und über eine entsprechende Datenbank zuordnen kann. In vielen Anwendungsfällen können mehr als 1000 verschiedene Meßgeber eingesetzt sein, die gleichzeitig oder nacheinander in dem Meßsystem betrieben werden.

Bei komplexen Meßsystemen mit ständig wechselnden Meßgebern und Meßaufgaben stellt die Überprüfung und Zuordnung der Kalibrierdaten der eingesetzten Meßgeber einen erheblichen Arbeitsaufwand dar. Auch die Speicherung der Meßgeber spezifischen Daten in der programmierbaren Erfassungseinheit stellt nur eine geringe Erleichterung dar, da die Zuordnung von Hand durchgeführt wird und so Fehler möglich sind.

Aus diesem Grund wurde bereits die Möglichkeit geschaffen, Meßgeber automatisch zu identifizieren. Drei Möglichkeiten zur Geberidentifikation sind bekannt.

Bei der steckerkodierten Geberidentifikation sind in einem Anschlußstecker des Meßgebers eine Reihe gleicher Steckkontakte für diesen Zweck reserviert. Einem Code entsprechend sind diese Steckkontakte verdrahtet und werden parallel in eine Dekodiereinheit eingelesen. Da nicht beliebig große Stecker verwendet werden können, ist diese Möglichkeit der Geberidentifikation auf eine kleine Anzahl von Meßgebern (meist weniger als 32 Kanäle) begrenzt. Außerdem muß zusätzlich zum Meßverstärker eine Dekodiereinheit vorhanden sein, um die Geberidentifikation durchführen zu können.

Bei der analogen Geberidentifikation wird in den Meßgeber ein zusätzlicher Widerstand eingebaut, dessen Größe zur Identifikation des Meßgebers dient. Um den an einem Meßeingang angeschlossenen Meßgeber zu identifizieren, wird der zusätzliche Widerstand, wie der Kalibrierwiderstand, parallel zum Geberelement geschaltet und dann über den Meßverstärker das so hervorgerufene Ausgangssignal des Meßgebers gemessen und der Meßgeber anhand des Signals identifiziert. Bei dieser Möglichkeit der Geberidentifikation ist lediglich ein weiterer zusätzlicher Steckkontakt im Anschlußstecker des Meßgebers erforderlich, um den zusätzlichen Widerstand einsetzen zu können. Die Auflösung, d.h. die Anzahl der identifizierbaren Meßgeber ist aber durch die Auflösung der einsetzbaren Widerstandswerte beschränkt und läßt die Erkennung von ca. 128 verschiedenen Meßgebern (7 Bit) zu. Mehr Widerstandswerte können aufgrund von Toleranzen, Offset, Rauschen und anderen störenden Einflüssen nicht sicher erfaßt werden. Der zusätzliche Widerstand kann auch mit Hilfe einer genauen Stromquelle über den Meßverstärker gemessen werden. Mit dieser Lösung kann eine Anzahl von bis zu 256 Meßgebern identifiziert werden, jedoch ist eine zusätzliche Stromquelle erforderlich, die den Schaltungsaufwand des Meßsystems erheblich erhöht.

Bei der digitalen Geberidentifikation mit seperater Ausleseleitung werden drei zusätzliche Steckkontakte im Anschlußstecker der Meßgeber benötigt. Im Aufbaustecker des Meßgebers ist eine Schaltung untergebracht und kann vom Meßgeber nicht getrennt werden. Diese Schaltung enthält alle Daten zur Geberidentifikation und oft auch die Kalibrierdaten des Meßgebers. Die Schaltung besteht zumeist aus einem Speicher/PROM und einer Steuerlogik, die ein serielles Schreiben und Lesen der Daten ermöglicht. Die Schaltung wird von einer im Meßverstärker vorhandenen Dekodierlogik oder Leseschaltung angesteuert bzw. ausgelesen. Jeder Meßverstärker muß aus diesem Grund mit dieser zusätzlichen Dekodierlogik oder Leseschaltung für die Meßgeberidentifikation ausgerüstet sein. Auch dadurch steigt der Schaltungsaufwand des Meßsystems und es entsteht eine Zuordnung zwischen identifizierbarem Meßgeber und Meßverstärkertyp, die die Flexibilität des Meßsystems einschränkt.

Die eingangs beschriebenen, bisher bekannten Möglichkeiten zur Geberidentifikation besitzen, wie bereits erwähnt, die folgenden Nachteile.

Stets werden zusätzliche Steckkontakte in den Meßgeberanschlüssen und zusätzliche Leitungen benötigt; im Fall der steckerkodierten Meßgeberidentifikation ist die Zahl der zusätzlichen Leitungen und Steckkontakte sehr groß. Die analoge Geberidentifikation ist aufgrund der Schwierigkeiten bei der Kalibrierung der zusätzlichen Widerstände sehr aufwendig. Das Meßsystem muß ferner um geeignete Komponenten (Stromquellen) ergänzt werden. Die digitale Geberidentifikation mit separater Auslese-/Einleseleitung benötigt außerdem im Meßverstärker eine Dekodier- oder Leseschaltung und ist dadurch nur mit diesem speziellen Verstärkertyp einsetzbar. Um Störungseinflüsse zu vermeiden, muß die zusätzliche Schaltung darüberhinaus in unmittelbarer Nähe des Meßverstärkers angeordnet werden.

Allen Möglichkeiten zur Geberidentifikation ist in der Praxis die Beschränkung auf eine sehr geringe Anzahl (weniger als 256 Kanäle) identifizierbarer Meßgeber gemeinsam.

Der vorliegenden Erfindung liegt daher die Aufgabe zugrunde, eine verbesserte Identifikationsvorrichtung für mehrere Meßgeber zu schaffen, die insbesondere ohne zusätzliche Leitungen im Meßaufbau, ohne zusätzliche Steckkontakte in den Anschlußsteckern und mit nur geringem zusätzlichen Aufwand eine Identifikation von Meßgebern ermöglicht.

Gelöst wird diese Aufgabe erfindungsgemäß durch eine Identifikationsvorrichtung für jeweils ein Geberelement aufweisende Meßgeber, die einen elektrischen Meßwert liefern, welcher mit einer ansteuerbaren Kalibriervorrichtung verstimmt werden kann, mit:
- einer Takterzeugungsschaltung zur Erzeugung eines Taktsignals in Abhängigkeit von der Ansteuerung der Kalibriervorrichtung, und
- einer seriellen Schaltung zur taktgesteuerten, seriellen Ausgabe einer dem jeweiligen Meßgeber zugeordneten Identifikationsbitfolge, die mit zumindest einem Ausgang der Taktgeneratorschaltung verbunden ist und die einen Ausgang für die Ausgabe eines Signals zur Verstimmung des Meßwertes am Geberelement in Abhängigkeit vom logischen Wert der jeweils ausgegebenen Stelle der Identifikationsbitfolge aufweist.

Es ist mit der erfindungsgemäßen Identifikationsvorrichtung möglich, eine sehr große Anzahl von Meßgebern zu identifizieren. Es entsteht dabei kein zusätzlicher Aufwand, weil die vorhandenen Leitungen und Steckkontakte der Kalibrierfunktion benutzt werden.

Die Identifikation eines Meßgebers geschieht erfindungsgemäß durch sequentielle Ausgabe einer Identifikationsbitfolge mit Hilfe der Kalibrierfunktion des Meßgebers. Durch die Erfassungseinheit wird ähnlich wie bei der Kalibrierung die Verstimmung des Geberelements (Meßbrücke) oder die Änderung der Eingangsspannung oder des Eingangsstroms der Erfassungseinheit erfaßt, um ein logisches Signal 0 oder 1 zu erkennen. Nacheinander wird so eine Folge von logischen Signalen 0 oder 1 erfaßt, die die Identifikationsinformation darstellt.

In einer vorteilhaften Ausgestaltung umfaßt die serielle Schaltung einen seriellen Speicher oder ein internes Schieberegister zur Abspeicherung der Identifikationsbitfolge.

In einer weiteren Ausgestaltung wird die fest vorgegebene oder von Hand festlegbare Identifikationsbitfolge über Kodiereingänge in die serielle Schaltung geladen.

In einer weiteren Ausgestaltung ist die Takterzeugungsschaltung ein Fensterkomparator oder ein Komparator.

Die erfindungsgemäße Identifikationsvorrichtung kann im Meßgeber selbst, im Zuleitungskabel, auch als Zwischenschaltung, oder im Anschlußstecker untergebracht werden. Die Anordnung hängt von der Größe der Stecker und der Meßgeber sowie von der letztlich realisierten Größe ab.

Die Identifikationsvorrichtung kann mit einem ASIC oder in Form von diskreten Bauelementen oder einer Kombination von diskreten Bauelementen und ASIC in SMD-Technik aufgebaut werden.

Die Erfindung wird im folgenden anhand der beiliegenden Zeichnungen genauer beschrieben. In den Zeichnungen zeigt:
Fig. 1 beispielhaft den Aufbau eines bekannten Meßgebers mit Kalibrierfunktion,
Fig. 2 den Meßgeber aus Fig. 1 mit einem ersten Ausführungsbeispiel der erfindungsgemäßen Identifikationsvorrichtung,
Fig. 3 ein zweites Ausführungsbeispiel der erfindungsgemäßen Identifikationsvorrichtung, und
Fig. 4 ein drittes Ausführungsbeispiel der erfindungsgemäßen Identifikationsvorrichtung.

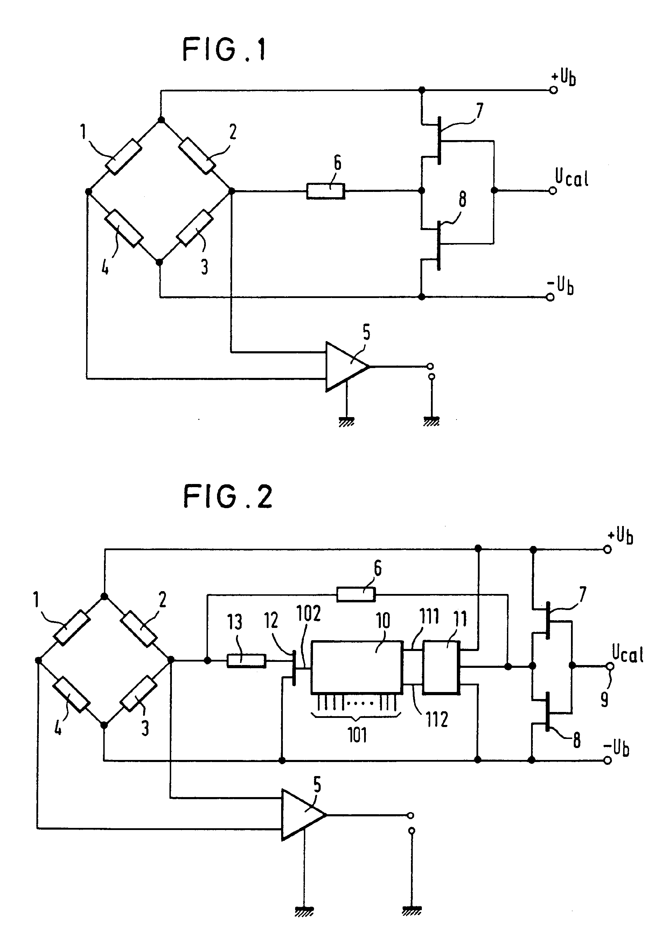

Bei dem in Fig. 1 gezeigten Meßgeber besteht das Geberelement aus einer Brückenschaltung aus vier Widerstandselementen 1, 2, 3 und 4. Die Brückenschaltung ist über eine erste Brückendiagonale mit Betriebsspannungen +U_{b} und -U_{b} und über eine zweite Brückendiagonale mit Eingängen eines Meßverstärkers 5 verbunden. Am Ausgang des Meßverstärkers wird während des Meßvorgangs die Meßspannung abgegeben.

Vor einer Meßreihe wird der Meßgeber geprüft und kalibriert. Dazu ist ein Kalibrierwiderstand 6 vorgesehen, der mit Hilfe von zwei Schaltelementen 7 und 8 an die Betriebsspannung +U_{b} bzw. die Betriebsspannung -U_{b} angelegt oder frei geschaltet werden kann. Den Schaltzustand des Kalibrierwiderstands 6 bestimmt die an den Kalibrieranschluß 9 angelegte Spannung U_{cal}. Wird der Kalibrieranschluß 9 positiv oder negativ geschaltet, wird der Kalibrierwiderstand 6 mit +U_{b} bzw. -U_{b} verbunden. Wird der Kalibrieranschluß Masse gelegt, ist der Kalibrierwiderstand 9 frei geschaltet.

Der Anschluß des Kalibrierwiderstandes 6, der mit dem gemeinsamen Anschluß der beiden Schaltelementen 7 und 8 verbunden ist, wechselt im Verlauf der Überprüfung und Kalibrierung des Meßgebers seine Polarität von +U_{b} über ca. OV nach -U_{b} und umgekehrt. Dieser Wechsel während des Kalibrierschaltvorangs kann beliebig oft durchgeschaltet werden, indem die entsprechende Steuerspannung an den Kalibrieranschluß 9 angelegt wird.

Bei dem in Fig. 2 dargestellen Ausführungsbeispiel wird die Identifikation des Meßgebers durch eine n-bit Schieberegisterschaltung 10 ermöglicht, der als Takterzeugungsschaltung ein Fensterkomparator 11 vorgeschaltet ist. Am Ausgang der Schieberegisterschaltung 10 ist ein Schaltelement 12 und ein Kodierwiderstand 13 angeschlossen, der mit der Brückenschaltung am Anschlußpunkt des Kalibrierwiderstands verbunden ist.

Der Fensterkomparator 11 ist gemeinsam mit dem Kalibrierwiderstand 6 an beide Schaltelemente 7 und 8 angeschlossen, so daß am Eingang des Fensterkomparators 11 im Wechsel des Kalibrierschaltvorgangs die Spannung +U_{b}, OV oder -U_{b} anliegt. Der Fensterkomparator 11 überwacht so den Schaltzustand des Kalibrierwiderstands 6.

Ist der Kalibrierwiderstand mit +U_{b} verbunden, gibt der Fensterkomparator 11 ein Signal an einem ersten Ausgang 111 ab. Wird der Kalibrierwiderstand 6 frei geschaltet, unterbricht der Fensterkomparator 11 das Signal am ersten Ausgang 111. Ist der Kalibrierwiderstand mit -U_{b} verbunden, gibt der Fensterkomparator 11 ein Signal an einem zweiten Ausgang 112 ab. Wird der Kalibrierwiderstand 6 erneut frei geschaltet, unterbricht der Fensterkomparator 11 auch das Signal am zweiten Ausgang 112.

Die beiden Ausgänge 111 und 112 sind derart mit der Schieberegisterschaltung 10 verbunden, daß das Signal am ersten Ausgang 111 bewirkt, daß ein in der Schieberegisterschaltung 10 vorhandenes Schieberegister geladen wird, und das Signal am zweiten Ausgang 112 den Inhalt des Schieberegisters weiterschaltet. Diese beiden Vorgänge werden im folgenden genauer beschrieben.

Ist der Kalibierwiderstand 6 mit der Betriebsspannung +U_{b} verbunden, gibt der Fensterkomparator 11 ein Signal am Ausgang 111 ab. Die Schieberegisterschaltung 10 übernimmt die an n Kodiereingängen 101 vorgegebene Bitfolge in das interne Schieberegister. Die Kodiereingänge 101 sind dazu mit Masse verbunden (logisch 0) oder diese Verbindung ist unterbrochen (logisch 1). Nach der Übernahme der Bitfolge liegen diese Daten im Schieberegister vor; das Schieberegister ist geladen.

Die Bitfolge kann bei entsprechender Gestaltung der Schaltung von Hand gesetzt (Autrennen von Leitungen) oder bei der Herstellung fest vorgegeben werden. In jedem Fall dient die eingestellte Bitfolge zur Identifikation des angeschlossenen Meßgebers. Ohne großen Platzbedarf kann durch ein 16-bit Schieberegister die Identifikation von über 32000 Meßgebern ermöglicht werden.

Während der Übernahme der Bitfolge in die Schieberegisterschaltung 10 ist der Kalibrierwiderstand 6 mit +U_{b} verbunden und liegt parallel zum Brückenwiderstandselement 2, so daß die Kalibrierung durchgeführt werden kann. Der Ausgang der Schieberegisterschaltung 10 ist dabei so geschaltet, daß der Kodierwiderstand 13 leer läuft und die Brückenschaltung durch den Kodierwiderstand 13 nicht beeinflußt wird. Dazu kann das erste am Ausgang 102 anstehende Bit der geladenen Bitfolge so gewählt werden, daß das Schaltelement 12 nicht durchgeschaltet wird, wenn dieses Bit unmittelbar nach dem Laden der Bitfolge am Ausgang 102 des Schieberegisters 10 ausgegeben wird. Die Schieberegisterschaltung kann aber auch so gestaltet sein, daß beim Laden des internen Schieberegisters die Ansteuerung des Schaltelements 12 verhindert wird.

Wird der Kalibrieranschluß 9 auf Masse geschaltet, bleibt der geladene Zustand der Schieberegisterschaltung erhalten, da an den Ausgängen 111 und 112 des Fensterkomparators 11 kein Signal abgegeben wird. Der Kalibrierwiderstand 6 wird frei geschaltet und die Brückenschaltung ist nicht mehr durch den Kalibrierwiderstand verstimmt. Der Meßgeber befindet sich in der Stellung "Messen".
Wird der Kalibrierwiderstand 6 mit -U_{b} verbunden, in dem der Kalibrieranschluß 9 negativ geschaltet wird, gibt der Fensterkomparator 11 am zweiten Ausgang 112 ein Signal ab und das interne Schieberegister der Schieberegisterschaltung 10 wird um einen Takt weitergeschaltet. Die zuvor geladene Bitfolge wird dadurch um eine Stelle verschoben. Am Ausgang 102 der Schieberegisterschaltung 10 erscheint das erste Bit zur Identifikation des Meßgebers. Abhängig vom logischen Wert der nun ausgegebenen Stelle der Bitfolge wird das Schaltelement 12 durchgeschaltet oder nicht durchgeschaltet und damit die Brückenschaltung verstimmt oder nicht verstimmt. Über den Meßverstärker 5 kann anhand der Verstimmung so ermittelt werden, welchen logischen Wert das am Ausgang 102 des Schieberegisters anstehende Bit der Identifikationsbitfolge hat.

Wird zum Beispiel am Ausgang des Meßverstärkers 5 eine Verstimmung der Brückenschaltung festgestellt, ist das erste Bit der Identifikationsbitfolge eine logische Eins. Ist keine Verstimmung meßbar, ist das erste Bit eine logische Null.

Solange der Kalibrierwiderstand 6 mit der Betriebsspannung -U_{b} verbunden ist, gibt der Fensterkomparator 11 am zweiten Ausgang 112 ein Signal ab. Für diese Zeitspanne bleibt die Parallelschaltung des Kodierwiderstandes 13 und damit die Verstimmung der Brückenschaltung erhalten. Die Verstimmung kann während der ganzen Zeit abgefragt und der Wert des Identifikationsbits ermittelt werden.

Danach wird der Kalibrierwiderstand 6 erneut frei geschaltet, so daß das Signal am Ausgang 102 unterbrochen und somit auch der Kodierwiderstand 13 frei geschaltet wird. Die Verstimmung der Brückenschaltung verschwindet. Der Meßgeber befindet sich wieder in der Stellung "Messen".

Im Anschluß daran wird der Kalibrierwiderstand 6 wieder mit -U_{b} verbunden, so daß der Fensterkomparator 11 erneut ein Signal am zweiten Ausgang 112 abgibt. Dieses Signal bewirkt, daß das Schieberegister um eine Stelle weitergeschoben wird und die nächste Stelle der Identifikationsbitfolge am Ausgang 102 ansteht. Wie oben bereits beschrieben wird die Brückenschaltung in Abhängigkeit vom nun ausgegebenen logischen Wert beeinflußt und der logische Wert durch Messung der Verstimmung ermittelt.

Der Wechsel zwischen den beiden Schaltzuständen des Kalibrierwiderstandes wird wiederholt, bis alle Bits der Identifikationsbitfolge nacheinander am Ausgang 102 der Schieberegisterschaltung 10 ausgegeben wurden. Durch die Messung der Verstimmung in jedem Schritt wird so die Identifikationsbitfolge ermittelt.

Für eine 16-bit Schieberegisterschaltung wird dieser Vorgang fünfzehnmal durchgeführt, d.h. der Kalibrieranschluß wird fünfzehnmal von negativ auf 0 V umgeschaltet und der Inhalt des zuvor mit der Identifikationsbitfolge geladenen internen Schieberegisters seriell ausgegeben.

Der Meßgeber kann dadurch automatisch identifiziert werden, da alle Schritte programmgesteuert durchgeführt werden können. Für die erfindungsgemäße Identifikationsvorrichtung werden weder zusätzliche Leitungen oder Steckerkontakte noch eine zusätzliche Dekodierschaltung benötigt, da die Identifikation des Meßgebers durch Ansteuerung der Schieberegisterschaltung über den vorhandenen Kalibrieranschluß und durch Erfassen der so hervorgerfenen Verstimmung über den vorhandenen Meßverstärker erfolgt.

In dem zuvor beschriebenen Ausführungsbeispiel kann die Spannung am Kalibrieranschluß 9 zwischen +U_{b}, 0 V und -U_{b} umgeschaltet werden. Die drei Schaltzustände werden dabei in die drei Betriebszustände Kalibrieren/Laden, Messen und Identifizieren umgesetzt. In Fällen, in denen die Umschaltung des Kalibrieranschlusses nur zwischen einer Betriebsspannung und 0V (Masse) erfolgen kann, ist die erfindungsgemäße Identifikationsvorrichtung mit Hilfe des folgenden Ausführungsbespiels zu realisieren.

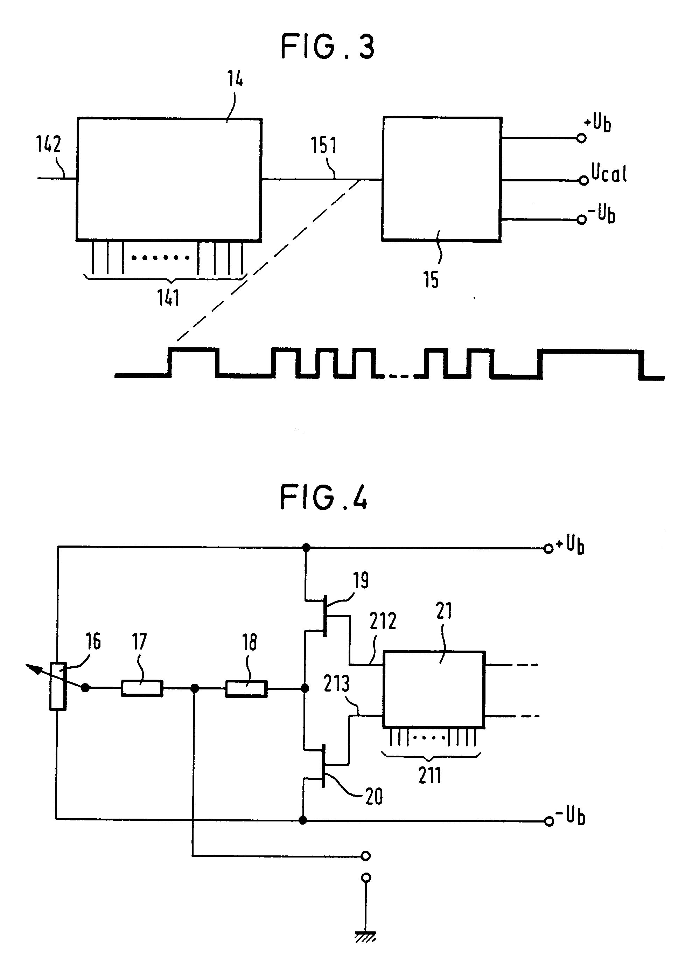

In Fig. 3 ist ein Ausführungsbeispiel dargestellt, das eine Schieberegisterschaltung 14 und einen Komparator 15 mit nur einer Verbindung zwischen den beiden aufweist. Die übrigen Schaltungsteile sind im wesentlichen identisch zu den entsprechenden Teilen der zuvor beschriebenen Schaltung und werden in der folgenden Beschreibung nicht mehr einzeln erwähnt.

Der Komparator 15 erfaßt den Schaltzustand des Kalibrieranschlüsses 9 bzw. des Kalibrierwiderstands und gibt ein entsprechendes Signal am Ausgang 151 ab. Da in bei diesem Ausführungsbeispiel hier nur ein Signalausgang zur Verfügung steht, ist die Impulsdauer des Signals am Ausgang 151 ausschlaggebend. Ein Impuls von z.B. 100 ms Länge bewirkt in der Schieberegisterschaltung 14, daß die Bitfolge von den Eingängen 141 in das interne Schieberegister geladen werden und der Kalibriervorgang durchgeführt wird. Durch diesen ersten Impuls wird der Zustand Kalibrieren/Laden eingestellt. Ein Impuls von z.B. 50 ms Länge wird von der Schieberegisterschaltung 14 so ausgewertet, daß der Inhalt des internen Schieberegisters durchgetaktet wird und die einzelnen Stellen der Identifikationsbitfolge am Ausgang 142 der Schieberegisterschaltung 14 ausgegeben werden. Die Impulsserie versetzt die Identifikationsschaltung in den Zustand Identifizieren. Ein Impuls von z.B. 200 ms Länge beendet die Kalibrierung/Identifikation und wird entsprechend ausgewertet.

Die Impulse am Ausgang 151 des Komparators 15 werden bestimmt durch den Schaltzustand des Kalibrieranschlusses 9. Dieser Schaltzustand kann aber, wie beim eingangs beschriebenen Ausführungsbeispiel, programmgesteuert beeinflußt werden.

In Fig. 4 ist ein Ausführungsbeispiel einer erfindungsgemäßen Identifikationsvorrichtung gezeigt, die zusammen mit einem Meßgeber verwendet werden kann, der ein Potentiometer als Geberelement aufweist. Das Potentiometer 16 ist mit zwei in Serie geschalteten Widerständen 17 und 18 verbunden. Am gemeinsamen Anschluß der beiden Widerstände 17 und 18 wird die Meßspannung abgegriffen. Zwei Schaltelemente 19 und 20 besitzen einen gemeinsamen Anschluß, an dem der Widerstand 18 angeschlossen ist. Durch die Schaltelemente 19 und 20 kann der Widerstand 18 an +U_{b} bzw. -U_{b} angeschlossen oder frei geschaltet werden. Die Schaltelemente werden durch eine Schieberegisterschaltung 21 angesteuert, die in diesem Ausführungsbeispiel zwei komplementäre Ausgänge 212 und 213 aufweist. Über die Kodiereingänge 211 wird, wie bereits oben beschrieben, die Identifikationsbitfolge eingelesen und in das interne Schieberegister geladen.

Die beiden Widerstände 17 und 18 werden im Gegentakt an eine der Betriebsspannungen +U_{b} und -U_{b} und die Signalleitung gelegt. Dadurch wird eine Verstimmung auf Grund der Identifiktionsbitfolge bewirkt, die über die Meßleitung eingelesen werden kann.

In allen Ausführungsbeispielen der erfindungsgemäßen Identifikationsvorrichtung kann an Stelle einer Schieberegisterschaltung mit internem Schieberegister ein serieller Speicher (PROM, EPROM, EEPROM) und/oder ein speziell gefertigte Halbleiterschaltung (ASIC) eingesetzt werden. In diesen Fällen können dann auch neben den Identifikationsdaten eine Reihe anderer Daten des Meßgebers und sogar ganze Datentabellen gespeichert und automatisch ausgelesen werden.

## Patentansprüche

1. Identifikationsvorrichtung für jeweils ein Geberelement (1, 2, 3, 4; 16) aufweisende Meßgeber, die einen elektrischen Meßwert liefern, welcher mit einer ansteuerbaren Kalibriervorrichtung (6; 17, 18) verstimmt werden kann mit:
- einer Takterzeugungsschaltung (11; 15) zur Erzeugung eines Taktsignals in Abhängigkeit von der Ansteuerung der Kalibriervorrichtung, und
- einer seriellen Schaltung (10; 14; 21) zur taktgesteuerten, seriellen Ausgabe einer dem Meßgeber zugeordneten Identifikationsbitfolge (101), die mit zumindest einem Ausgang (111,112;151) der Takterzeugungschaltung (11) verbunden ist und die einen Ausgang (102;142;212) für die Ausgabe eines Signals zur Verstimmung des Meßwertes am Geberelement (1, 2, 3, 4; 16) in Abhängigkeit vom logischen Wert der jeweils ausgegebenen Stelle der Identifikationsbitfolge (101) aufweist.

2. Identifikationsvorrichtung nach Anspruch 1,
dadurch **gekennzeichnet,** daß
die serielle Schaltung (10; 14; 21) einen seriellen Speicher zur Abspeicherung der Identifikationsbitfolge aufweist.

3. Identifikationsvorrichtung nach Anspruch 1 oder 2,
dadurch **gekennzeichnet,** daß
die serielle Schaltung (10; 14; 21) ein internes Schieberegister aufweist.

4. Identifikationsschaltung nach Anspruch 1, 2 oder 3,
dadurch **gekennzeichnet,** daß
die Identifikationsbitfolge über Kodiereingänge (101; 141; 211) in die serielle Schaltung (10, 14, 21) ladbar ist.

5. Identifikationsvorrichtung nach Anspruch 4,
dadurch **gekennzeichnet,** daß
die Identifikationsbitfolge an den Kodiereingängen (101, 141, 211) fest vorgegeben ist.

6. Identifikationsvorrichtung nach Anspruch 4,
dadurch **gekennzeichnet,** daß
die Identifikationsbitfolge an den Kodiereingängen (101; 141; 211) von Hand festlegbar ist.

7. Identifikationsvorrichtung nach einem der Ansprüche 1 bis 6,
dadurch **gekennzeichnet,** daß
die Takterzeugungsschaltung einen Fensterkomparator (11) umfaßt.

8. Identifikationsschaltung nach einem der Ansprüche 1 bis 6,
dadurch **gekennzeichnet,** daß die Takterzeugungsschaltung einen Komparator (15) umfaßt.

9. Identifikationsvorrichtung nach Anspruch 7, dadurch **gekennzeichnet,** daß
der Fensterkomparator (11) den Schaltzustand der Kalibriervorrichtung (6) erfaßt und, wenn die Kalibriervorrichtung mit einer ersten Betriebsspannung (+U_{b}) verbunden ist, ein Signal an einem ersten Ausgang (111) abgibt, wenn die Kalibriervorrichtung mit einer zweiten Betriebsspannung (-U_{b}) verbunden ist, ein Signal an einem zweiten Ausgang (112) abgibt, und, wenn die Kalibriervorrichtung freigeschaltet ist, an beiden Ausgängen (111, 112) kein Signal abgibt,
und daß die Eingänge der seriellen Schaltung (10, 14; 21) an die Ausgänge (111, 112) des Fensterkomparators angeschlossen sind, wobei die serielle Schaltung
eine an Kodiereingängen (101) anstehende Identifikationsbitfolge in ein internes Schieberegister lädt, wenn ein Signal am ersten Ausgang (111) anliegt, und
bei jedem am zweiten Ausgang (112) angelegten Signal den Inhalt des internen Schieberegisters um jeweils eine Stelle weiterschiebt und seriell die binären Stellen der Identifikationsbitfolge an einem Ausgang (102) ausgibt.

10. Identifikationsvorrichtung nach Anspruch 9, dadurch **gekennzeichnet,** daß
ein Schaltelement (12) an dem Ausgang (102) der seriellen Schaltung angeschlossen ist, dessen Schaltzustand von der ausgegebenen binären Stelle abhängig ist und das einen Kodierwiderstand (13) mit der zweiten Betriebsspannung (-U_{b}) verbindet, wodurch der Meßwert in Abhängigkeit von der binären Stelle der Identifikationsbitfolge verstimmt wird.

11. Meßgeber mit einer Identifikationsvorrichtung nach einem der Ansprüche 1 bis 10, dadurch
**gekennzeichnet,** daß
das Geberelement des Meßgebers eine Brückenschaltung aus vier Widerstandselementen (1, 2, 3, 4) besitzt, über deren erste Brückendiagonale die Betriebsspannungen (+U_{b}, -U_{b}) und über deren zweite Brückendiagonale ein Meßverstärker (5) angeschlossen sind.

12. Meßgeber nach Anspruch 11, dadurch **gekennzeichnet,** daß
der Meßgeber einen Kalibrierwiderstand (6) als Kalibriervorrichtung besitzt, der mit einem am Meßverstärker (5) angeschlossenen Anschluß der Brückenschaltung und mit einem gemeinsamen Anschluß von zwei Schaltelementen (7, 8) derart verbunden ist, daß durch Ansteuerung der Schaltelemente (7, 8) der Kalibrierwiderstand wahlweise mit einer der Betriebsspannungen (+U_{b}, -U_{b}) verbunden oder frei geschaltet ist.

## Claims

1. An identification device for sensors which each comprise a sensor element (1, 2, 3, 4; 16) and which supply an electrical measurement value which can be detuned with a controllable calibration device (6; 17, 18) comprising:
- a clock generating circuit (11; 15) which generates a clock signal in dependence upon the operation of the calibration device and
- a serial circuit (10; 14; 21) for the clock-controlled, serial output of an identification bit sequence (101) assigned to the sensor, which is connected to at least one output (111, 112; 151) of the clock generating circuit (11) and which possesses an output (102; 142; 212) for the output of a signal for detuning the measurement value of the sensor element (1, 2, 3, 4; 16) in dependence upon the logic value of the respective output digit position of the identification bit sequence (101).

2. An identification device as claimed in Claim 1, characterised in that the serial circuit (10; 14; 21) comprises a serial store for the storage of the identification bit sequence.

3. An identification device as claimed in Claim 1 or 2, characterised in that the serial circuit (10; 14; 21) comprises an internal shift register.

4. An identification circuit as claimed in Claim 1, 2 or 3, characterised in that the identification bit sequence can be loaded via coder inputs (101; 141; 211) into the serial circuit (10, 14, 21).

5. An identification device as claimed in Claim 4, characterised in that the identification bit sequence at the coder inputs (101, 141, 211) is predetermined.

6. An identification device as claimed in Claim 4, characterised in that the identification bit sequence at the coder inputs (101; 141; 211) can be manually defined.

7. An identification device as claimed in one of Claims 1 to 6, characterised in that the clock generating circuit comprises a window comparator (11).

8. An identification circuit as claimed in one of Claims 1 to 6, characterised in that the clock generating circuit comprises a comparator (15).

9. An identification device as claimed in Claim 7, characterised in that the window comparator (11) detects the switching state of the calibration device (6) and when the calibration device is connected to a first operating voltage (+U_{b}) emits a signal from a first output (111), when the calibration device is connected to a second operating voltage (-U_{b}) emits a signal from a second output (112), and when the calibration device is released emits no signal from the two outputs (111, 112), and that the inputs of the serial circuit (10, 14; 21) are connected to the outputs (111, 112) of the window comparator, where the serial circuit loads an identification bit sequence, present at coder inputs (101), into an internal shift register when a signal occurs at the first output (111) and in the case of each signal connected to the second output (112) steps on the contents of the internal shift register by in each case one position and outputs the binary digit positions of the identification bit sequence from an output (102) in serial fashion.

10. An identification device as claimed in Claim 9, characterised in that a switching element (12) is connected to the output (102) of the serial circuit, the switching state of which switching element (12) is dependent upon the output binary digit position and which connects a coder resistor (13) to the second operating voltage (-U_{b}), whereby the measurement value is detuned in dependence upon the binary digit position of the identification bit sequence.

11. A sensor comprising an identification device as claimed in one of Claims 1 to 10, characterised in that the sensor element of the sensor comprises a bridge circuit composed of four resistance elements (1, 2, 3, 4), via the first bridge diagonal of which the operating voltages (+U_{b}, -U_{b}) are connected and via the second bridge diagonal of which a measuring amplifier (5) is connected.

12. A sensor as claimed in Claim 11, characterised in that the sensor comprises a calibration resistor (6) as calibration device, which is connected to a terminal of the bridge circuit connected to the measuring amplifier (5) and to a common terminal of two switching elements (7, 8) in such manner that by operating the switching elements (7, 8) the calibration resistor is optionally connected to one of the operating voltages (+U_{b}, -U_{b}) or is released.

## Revendications

1. Dispositif d'identification pour des capteurs, présentant chacun un élément transducteur (1,2,3,4;16) fournissant une valeur de mesure électrique, pouvant être désaccordé à l'aide d'un dispositif de calibrage (6;17,18) susceptible d'être commandé, avec :
- un circuit de cadencement (11;15) destiné à produire un signal de cadencement en fonction de la commande opérant sur le dispositif de calibrage, et
- un circuit série (10;14;21), destiné à envoyer en mode série, suivant une commande de cadencement, une suite de bits d'identification (101) associée au capteur, liée à au moins une sortie (111,112,151) du circuit de cadencement (11) et présentant une sortie (102;142;212) pour l'envoi d'un signal destiné à désaccorder la valeur de mesure sur l'élément transducteur (1,2,3,4;16), en fonction de la valeur logique de l'endroit spécifique de l'envoi de la suite de bits d'identification (101).

2. Dispositif d'identification selon la revendication 1, caractérisé en ce que le circuit série (10;14;21) présente une mémoire série destinée à stocker la suite de bits d'identification.

3. Dispositif d'identification selon la revendication 1 ou 2, caractérisé en ce que le circuit série (10;14;21) présente un registre à décalage interne.

4. Dispositif d'identification selon la revendication 1, 2 ou 3, caractérisé en ce que la suite de bits d'identification est susceptible d'être chargée dans le circuit série (10,14,21) par l'intermédiaire d'entrées de codage (101;141;211).

5. Dispositif d'identification selon la revendication 4, caractérisé en ce que la suite de bits d'identification est allouée de façon fixe aux entrées de codage (101,141,211).

6. Dispositif d'identification selon la revendication 4, caractérisé en ce que la suite de bits d'identification est susceptible d'être déterminée manuellement aux entrées de codage (101; 141;211).

7. Dispositif d'identification selon l'une des revendications 1 à 6, caractérisé en ce que le circuit de cadencement comprend un comparateur à fenêtre (11).

8. Dispositif d'identification selon l'une des revendications 1 à 6, caractérisé en ce que le circuit de cadencement comprend un comparateur (15).

9. Dispositif d'identification selon la revendication 7, caractérisé en ce que le comparateur à fenêtre (11) saisit l'état de commutation du dispositif de calibrage (6) et, lorsque le dispositif de calibrage est relié à une première tension opérationnelle (+U_{b}), envoie un signal à une première sortie (111), lorsque le dispositif de calibrage est relié à une deuxième tension opérationnelle (-U_{b}), envoie un signal à une deuxième sortie (112) et n'envoie aucun signal aux deux sorties (111, 112), lorsque le dispositif de calibrage n'est pas commuté,
et en ce que les entrées du circuit série (10,14;21) sont raccordées aux sorties (111,112) du comparateur à fenêtre, le circuit série chargeant dans un registre à décalage interne une suite de bits d'identification arrivées aux entrées de codage (101), lorsqu'il y a présence d'un signal sur la première sortie (111), et
qui, pour chaque signal présent sur la deuxième sortie (112), déplace chaque fois d'un emplacement le contenu du registre à décalage interne et envoie en mode série à une sortie (102) les emplacements binaires de la suite de bits d'identification.

10. Dispositif d'identification selon la revendication 9, caractérisé en ce qu'est raccordé à la sortie (102) du circuit série un élément de commutation (12), dont l'état de commutation est fonction de l'emplacement binaire ayant été émis et qui relie une résistance de codage (13) à la deuxième tension opérationnelle (-U_{b}), faisant que la valeur de mesure est désaccordée en fonction de l'emplacement binaire de la suite de bits d'identification.

11. Dispositif d'identification selon l'une des revendications 1 à 10, caractérisé en ce que l'élément transducteur du capteur comporte un circuit à pont, composé de quatre éléments résistants (1,2,3,4), sur la première diagonale de pont duquel sont raccordées les tensions opérationnelles (+U_{b},-U_{b}) et sur la deuxième diagonale de pont duquel est raccordé un amplificateur de mesure (5).

12. Dispositif d'identification selon la revendication 11, caractérisé en ce que le capteur comporte une résistance de calibrage (6) servant de dispositif de calibrage, reliée à un raccordement, relié à l'amplificateur de mesure (5) du circuit à pont et reliée à un raccordement commun de deux éléments de commutation (7,8), de telle façon qu'au moyen d'une commande des éléments de commutation (7,8), la résistance de calibrage est commutée à volonté, de façon à être reliée ou non à l'une des tensions opérationnelles (+U_{b},-U_{b}).
